# EUROPÄISCHE PATENTSCHRIFT

(11) **EP 2 891 826 B1**
(45) Veröffentlichungstag und Bekanntmachung des Hinweises auf die Patenterteilung: **27.03.2019**
(21) Anmeldenummer: 14194079.1
(22) Anmeldetag: 20.11.2014
(51) Int. Cl.: F16H 25/20, F16D 11/14

(54) **Elektromotorischer Linearantrieb**
Electromotive linear drive
Entraînement linéaire électromotorisé

(30) Priorität: 20.11.2013 DE 202013105249 U
(43) Veröffentlichungstag der Anmeldung: 08.07.2015
(73) Patentinhaber: DewertOkin GmbH, 32278 Kirchlengern (DE)
(72) Erfinder: Oberndörfer, Andreas, 33739 Bielefeld (DE)
(74) Vertreter: Lippert Stachow Patentanwälte Rechtsanwälte

(56) Entgegenhaltungen:
- DE-A1- 1 806 131
- DE-A1- 19 652 061
- DE-U- 1 903 818
- DE-U1-202011 000 964
- DE-U1-202013 101 333

## Beschreibung

Die Erfindung betrifft einen elektromotorischen Linearantrieb gemäß dem Oberbegriff des Anspruchs 1.

Aus DE 20 2011 000 964 U1 ist derartiger Linearantrieb bekannt, bei welchem eine Klauenkupplung am freien Ende des Hubrohres vorgesehen ist. Dabei ist für die Hubfunktion eine feste Verbindung der Spindelmutter mit dem Hubrohr vorhanden. Damit dieser bekannte Verstellantrieb Verstellkräfte nur in einer Bewegungsrichtung erzeugen kann, ist die Klauenkupplung mit einer Art vorgespanntem Freilauf ausgestattet.

Der hier in Rede stehende elektromotorische Linearantrieb wird insbesondere im Zusammenhang mit Möbeln verwende, welche mit bewegbaren Bauteilen versehen sind. Es handelt sich dabei insbesondere um Krankenhaus- und Pflegebetten, aber auch Sessel und ähnliche Möbeln. Ferner werden derartige Linearantriebe auch für Patientenlifter verwendet.

Allgemein gilt für Klauenkupplungen, dass das Einkuppeln Probleme verursachen kann dadurch, dass beim Schließen der Vorsprung des einen Kupplungsabschnitts zunächst auf einem Vorsprung des anderen Kupplungsabschnittes sitzt. Dies kann eine schlagartige Verschiebung der Teile beim Einkuppeln zur Folge haben.

Aus DE 196 52 061 A1 ist eine Klauenkupplung zur Übertragung einer Drehbewegung von einer Antriebswelle auf eine Abtriebswelle bekannt mit einer Vielzahl von ersten Klauen am Ende der Antriebswelle und einer Vielzahl von zweiten Klauen am Ende der angetriebenen Welle und einer Positioniereinrichtung zur Drehung einer der Wellen, um die gedrehte Welle in eine Position zu bringen, in der die ersten Klauen mit den zweiten Klauen stoßfrei miteinander in Eingriff bringbar sind.

Der Erfindung liegt die Aufgabe zugrunde, eine lösbare Verbindung zwischen Abtriebsglied und Anschlussteil zu schaffen, welche der Ausgestaltung eines Linearantriebes für Betten und Patientenlifter Rechnung trägt.

Diese Aufgabe wird durch die Lehre des Anspruchs 1 gelöst.

Die Erfindung lässt sich vereinfachend dahingehend zusammenfassen, dass eine doppelte Klauenkupplung vorgesehen ist, von der die eine als Lastkupplung wirkt und das Drehmoment z.B. von der Spindelmutter auf das Anschlussteil bzw. das Hubrohr überträgt, und die andere das Ausrichten der Kupplungsteile der Lastkupplung bewirkt derart, dass diese vor dem finalen Einkuppeln die erforderliche Ausrichtung zueinander aufweisen, ohne dass dazu zusätzliche Maßnahmen erforderlich wären.

Die Länge der zusammenwirkenden Ausnehmungen und Vorsprünge der Hilfskupplung in Richtung der Schließbewegung kann grösser sein als die der Vorsprünge und Ausnehmungen der Lastkupplung, und zwar mindestens um die Länge des Schließweges, die erforderlich ist, damit die Kupplungsteile der Lastkupplung unter allen betrieblichen Bedingungen vor Beginn des Ineinandergreifens derselben in gewünschter Weise zueinander ausgerichtet sind.

In der Zeichnung ist ein Ausführungsbeispiel der Erfindung dargestellt. Es zeigen:
Figur 1 die Vorderansicht einer Kupplung gemäß der Erfindung in auseinandergezogener Position der beiden Kupplungsabschnitte,
Figur 2 eine Ansicht, teilweise im Schnitt in Richtung der Pfeile A-A der Figur 1.

Die beiden Kupplungsabschnitte 10a und 10b sind jeweils mit zwei Kupplungsteilen 14a, 16a bzw. 14b, 16b versehen, die jeweils in einem Abstand in Richtung der Längsachse der Kupplung angebracht sind. Die beiden Kupplungsteile 14a, 14b bilden eine Lastkupplung. Die beiden Kupplungsteile 16a, 16b bilden eine Hilfskupplung, deren Kupplungsteile beim Schließen der Kupplung in Eingriff miteinander kommen, bevor die beiden Kupplungsteile 14a, 14b der Lastkupplung mit ihren Vorsprüngen 18 und Ausnehmungen 20 zur Aufnahme eines Drehmomentes in Eingriff sind. Demzufolge sind auch die Positionierung der Kupplungsteile 16a, 16b und die axiale Länge von deren Vorsprüngen 22 am Kupplungsabschnitt 10a und der Vorsprünge 24 am Kupplungsabschnitt 10b sowie der jeweiligen Ausnehmungen 26 und 28 so gewählt, dass beim Zusammenführen beider Kupplungsabschnitte 10a, 10b in axialer Richtung zum Schließen der Kupplung die Vorsprünge 22 und 24 mit den Ausnehmungen 26 und 28 des gegenüberliegenden Kupplungsabschnittes eher in Eingriff kommen als dies bei den Kupplungsteilen 14a, 14b der Lastkupplung der Fall ist. Auf diese Weise wird eine automatische Ausrichtung der Kupplungsteile zueinander erreicht.

Die Zeichnung lässt erkennen, dass die zahnartigen Vorsprünge 22 des Kupplungsteils 16a am Kupplungsabschnitt 10a verhältnismäßig schmal, also mit einer geringen Breite in Umfangsrichtung versehen sind und an den freien Enden 30 spitz zulaufen. Letzteres gilt auch, wenngleich weniger stark ausgeprägt, für die Vorsprünge 24 des Kupplungsteiles 16b am Kupplungsabschnitt 10b. Auch hier sind die Stirnflächen 32 abgeschrägt, so dass beim Zusammenführen der beiden Kupplungsabschnitte 10a, 10b beim Schließen der Kupplung die spitzen freien Enden 30 der Vorsprünge 22 beim Auftreffen auf die Schrägflächen 32 an diesen entlang gleiten und so ein Drehmoment in Umfangsrichtung der im Querschnitt etwa kreisförmigen Kupplungsabschnitte entsteht, das eine relative Rotation zwischen beiden Kupplungsabschnitten bewirkt. Diese relative Rotation erfolgt in Abhängigkeit von der Ausgangsposition beider Kupplungsabschnitte solange, bis die Kupplungsteile 14a, 14b der Lastkupplung derart zueinander ausgerichtet sind, dass bei fortgesetzter Bewegung beider Kupplungsabschnitte in Schließrichtung die Vorsprünge 18 und Ausnehmungen 20 der beiden Kupplungsteile 14a, 14b ineinander eingreifen, ohne dass es zunächst zu einem Aufsetzen der Vorsprünge aufeinander und anschließend zu einer schlagartigen Verschiebung der beiden Kupplungsabschnitte in die Endstellung kommt.

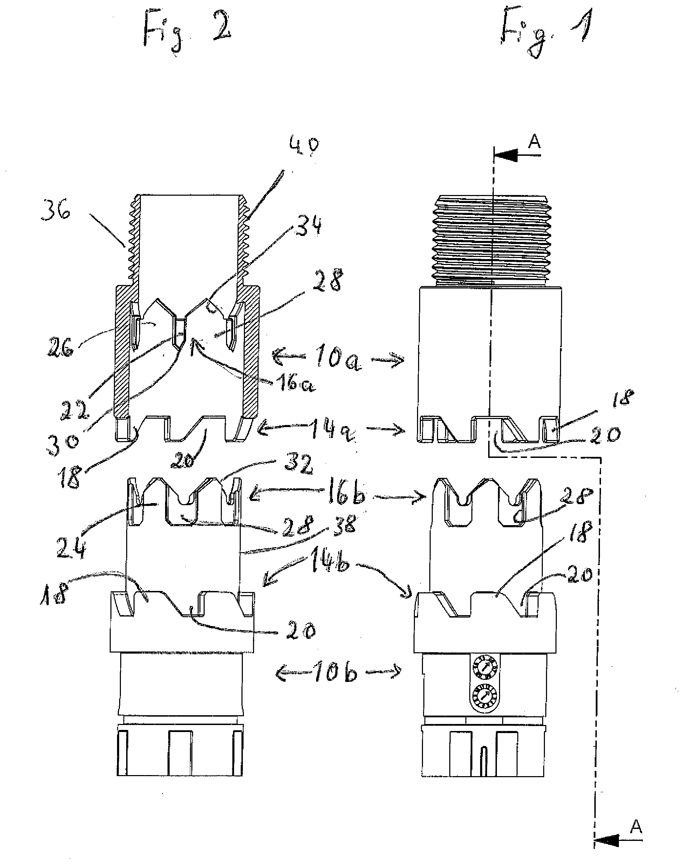

Die die Fortsätze 22 tragende Wandung des Kupplungsabschnittes 16a ist zwischen diesen Fortsätzen durch Randabschnitte 34 begrenzt, welche nach oben - bezogen auf die Darstellung in Figur 2 - etwas ausgeschnitten sind, so dass die Vorsprünge 24 am komplementären Kupplungsteil 16b in der Schließposition der Kupplung in diese Ausschnitte eingreifen können. Außerdem können dadurch die Vorsprünge 22 kürzer bemessen sein.

Als zweckmäßig hat sich eine Ausgestaltung der Kupplungsabschnitte herausgestellt, bei welcher die beiden Kupplungsteile 16a, 16b der Hilfskupplung jeweils von einem Bauteil 36, bzw. 38 des Kupplungsabschnittes 10a bzw. 10b getragen sind, welcher einen kleineren Durchmesser aufweist als der das Kupplungsteil 14a bzw. 14b der Lastkupplung tragende Bauteil.

Figur 2 der Zeichnung lässt ferner erkennen, dass die Ausnehmungen 28 an den Kupplungsteilen 16a, 16b wesentlich breiter bemessen sind als die Breite der zahnartigen Vorsprünge 22 an den Kupplungsteilen 16a, 16b, so dass bei geschlossener Kupplung ein Spiel zwischen den Fortsätzen 22 und den Begrenzungen der Ausnehmungen 28 in Umfangsrichtung der Kupplungsabschnitte vorhanden ist. Dies trägt der Tatsache Rechnung, dass die Lastkupplung 14a, 14b so ausgebildet ist, dass sie ein Drehmoment nur in einer Richtung übertragen kann, wie sich aus der Form der Vorsprünge 18 und der Ausnehmungen 20 der Lastkupplung 14a, 14b ergibt. Somit ist die Kupplung in der entgegengesetzten Richtung mit einem Freilauf versehen. Das Spiel zwischen den Vorsprüngen 22 und den zugehörigen Ausnehmungen 28 der Kupplungsteile 16a, 16b ermöglicht eine Drehbewegung in Freilaufrichtung auch bei geschlossener Kupplung.

Bei dem in der Zeichnung dargestellten Ausführungsbeispiel sind die Kupplungsteile der Lastkupplung einerseits und der Hilfskupplung andererseits entlang der Längsachse der Kupplung jeweils in einem Abstand voneinander angeordnet. Es ist jedoch auch möglich, dass die Kupplungsteile 14a und 16a bzw. 14b und 16b in Längsrichtung aneinander angrenzen. Ferner könnte sie einander überlappend angeordnet sein. So können beispielsweise die spitzen freien Enden 30 der Vorsprünge 22 am Kupplungsteil 16a in der Offenstellung der Kupplungsabschnitte an den Fussgrund der Ausnehmung 20 angrenzen, gegebenenfalls diesen überdecken oder sogar überlappen. Dies ist aufgrund der unterschiedlichen Durchmesser der Lastkupplung und der Hilfskupplung möglich. Entscheidend ist, dass die durch die Hilfskupplung bewirkte Ausrichtung der beiden Kupplungsabschnitte zueinander abgeschlossen ist, bevor die miteinander in Eingriff befindlichen Kupplungsteile 14a, 14b der Lastkupplung eine weitere Rotationsbewegung der Kupplungsabschnitte 10a, 10b verhindern.

Die Kupplung ist so angeordnet dass der Kupplungsabschnitt 10a dem Anschlussteil, zum Beispiel einem Hubrohr, und der Kupplungsteil 10b dem Abtriebsglied, bzw. der Spindelmutter zugeordnet ist. Die Zuordnung des jeweiligen Kupplungsteils 10a, 10b an der Spindelmutter erfolgt unmittelbar. Diese Zuordnung kann stoffschlüssig erfolgen. Letztgenannte Ausführung kann als bevorzugte Ausführung gesehen. Das Kupplungsteil 10a, 10b ist integraler Bestandteil der Spindelmutter.

Die Verbindung zwischen Kupplungsabschnitt 10a und dem Hubrohr oder dergleichen kann über ein Außengewinde 40 am Kupplungsteil 10a erfolgen, welches in ein entsprechendes Innengewinde am nicht dargestellten Hubrohr eingreift.

Wenn das Anschlussteil als Hubrohr ausgebildet ist, besteht auch die Möglichkeit, wenigstens einen der diesem zugeordneten Kupplungsabschnitte 10a, 10b einstückig am Hubrohr anzubringen. Als Anschlussteil ist gemäß der vorliegenden Erfindung ein Bauelement definiert, welches dazu geeignet ist, die Bewegung der Spindelmutter auf ein Bauteil eines Möbels unmittelbar oder mittelbar zu übertragen. Eine unmittelbare Übertragung erfolgt, wenn das freie Ende des als Hubrohr ausgebildeten Anschlussteils mit einem Möbelbauteil verbunden ist. Eine mittelbare Übertragung erfolgt unter Zuhilfenahme weiterer Bauteile, welche mit dem freien Ende des Anschlussteils bzw. mit dem freien Ende des Hubrohres verbunden und beispielsweise als Gabelkopf oder dergleichen ausgebildet sind, wobei dieser dann mit dem Möbelbauteil verbunden ist.

Die zwischen Spindelmutter und Anschlussteil vorgesehene Kupplung gemäß der Erfindung kann zusätzlich zu einer Kupplung vorgesehen sein, welche zwischen dem vorzugsweise als Hubrohr ausgebildeten Anschlussteil und den verstellbaren Teil eines Möbels oder Patientenlifters angeordnet und beispielsweise in DE 20 2011 000 964 U1 beschrieben ist.

Diese Kupplung kann auch als Klauenkupplung ausgebildet und manuell betätigbar sein. Die Antriebsseite dieser Klauenkupplung ist dem Anschlussteil bzw. mit dem Hubrohr fest verbunden, wobei deren Abtriebsseite mit dem Möbelbauteil verbunden ist. In der Normalbetriebstellung überträgt diese manuell betätigbare Klauenkupplung Kräfte sowohl in Längsrichtung, also in Richtung der linearen Verstellbewegung der Spindelmutter, als auch in deren Umfangsrichtung. In ausgekuppelten und damit in betätigtem Zustand überträgt die manuell betätigbare Klauenkupplung keine Kräfte in Umfangsrichtung. Es besteht jedoch die Möglichkeit, durch vorzugsweise manuellen Angriff an einem der Kupplungsteile oder am Hubrohr dieses in die jeweilige neue Betriebsstellung zu verdrehen. Wenn das Hubrohr, das Kupplungsteil 10a, das Kupplungsteil 10b und die Spindelmutter in drehfester Verbindung miteinander stehen, kann die Spindelmutter manuell in Längsrichtung der Spindel verfahren werden, so dass in einer Notsituation eine in beispielsweise gegen die Schwerkraft erstellte Last durch manuelles Drehen am Anschlussteil bzw. Hubrohr abgesenkt werden kann.

Die beiden Kupplungsteile 10a und 10b der zwischen Spindelmutter und Hubrohr befindlichen Kupplung kommen dann außer Eingriff, wenn zum Beispiel der Tragarm oder Ausleger eines Patientenlifters - im Allgemeinen versehentlichirgendwo aufliegt und somit die durch den Linearantrieb zu bewirkende Bewegung unterbrochen wird. Da Schließen der Kupplung, also das Wiedereinkuppeln der Kupplungsteile, erfolgt, selbsttätig, sobald wieder normale Betriebsbedingungen vorhanden sind.

### Bezugzeichenliste

- 10a, b: Kupplungsabschnitt
- 14a, b: Kupplungsteil
- 16a, b: Kupplungsteil
- 18: Vorsprung an 14a, b
- 20: Ausnehmungen 14a, b
- 22: Vorsprung an 16a
- 24: Vorsprung an 16b
- 26: Ausnehmung an 16a
- 28: Ausnehmung an 16b
- 30: freies Ende von 22
- 32: Schrägfläche
- 34: Randabschnitt
- 36: Bauteil von 10a
- 38: Bauteil von 10b
- 40: Außengewinde

## Patentansprüche

1. Elektromotorischer Linearantrieb zur Verwendung an Möbeln und Patientenliftern, der mit einer Antriebseinheit versehen ist, deren Abtriebsglied als linear verfahrbare Spindelmutter ausgebildet ist, die mit einem Anschlussteil zur Verbindung mit einem verstellbaren Teil eines Möbels oder eines Patientenlifters in Wirkverbindung steht, wobei die Spindelmutter über eine lösbare, ein Drehmoment aufnehmende Lastkupplung mit dem Anschlussteil verbindbar ist, wobei die Lastkupplung (14a, 14b) als Klauenkupplung ausgebildet ist, und zwei Kupplungsabschnitte (10a, 10b) vorgesehen sind, **dadurch gekennzeichnet, dass** der erste der Kupplungsabschnitte (10a, 10b) integraler Bestandteil der Spindelmutter ist, und der zweite der Kupplungsabschnitte (10a, 10b) mit dem Anschlussteil verbunden ist, und weiterhin eine Hilfskupplung (16a, 16b) vorgesehen ist, deren erstes Kupplungsteil (16a, 16b) am ersten Kupplungsabschnitt (10a, 10b) und deren zweites Kupplungsteil am zweiten Kupplungsabschnitt angebracht ist, und die Kupplungsteile von Lastkupplung (14a, 14b) und Hilfskupplung (16a, 16b) in Schließrichtung zueinander positioniert sind derart, dass im Verlauf der Schließbewegung der beiden Kupplungsabschnitte die beiden Kupplungsteile der Hilfskupplung in Eingriff miteinander kommen, bevor die beiden Kupplungsteile (14a, 14b) der Lastkupplung miteinander in Eingriff kommen, und die zusammenwirkenden Ausnehmungen (26) und Vorsprünge (28) beider Kupplungsteile (16a, 16b) der Hilfskupplung so ausgebildet und angeordnet sind, dass im Verlauf der relativen Schließbewegung der Kupplungsabschnitte (10a, 10b) die Kupplungsteile (14a, 14b) der Lastkupplung in Umfangsrichtung eine Ausrichtung für die finale Schließstellung erfahren.

2. Linearantrieb nach Anspruch 1, **dadurch gekennzeichnet, dass** wenigstens eine der miteinander in Berührung kommenden Flächen beider Kupplungsteile (16a, 16b) schräg zur Schließrichtung der Kupplungsabschnitte (10a, 10b) verläuft derart, dass im Verlauf der Schließbewegung ein Drehmoment entsteht, um die Kupplungsteile (14a, 14b) der Lastkupplung in Umfangsrichtung zueinander auszurichten.

3. Linearantrieb nach einem der vorhergehenden Ansprüche, **dadurch gekennzeichnet, dass** der Durchmesser der kreisförmigen Kupplungsteile (16a, 16b) der Hilfskupplung kleiner ist als der Durchmesser der Kupplungsteile der Lastkupplung (14a, 14b).

4. Linearantrieb nach einem der vorhergehenden Ansprüche, **dadurch gekennzeichnet, dass** die Kupplungsabschnitte (16a, 16b) der Hilfskupplung derart ausgebildet sind, dass in der Schließstellung beider Kupplungsabschnitte (10a, 10b) eine begrenzte relative Rotationsbewegung beider Kupplungsabschnitte möglich ist.

5. Linearantrieb nach einem der vorhergehenden Ansprüche, **dadurch gekennzeichnet, dass** die Vorsprünge (22) wenigstens eines der Kupplungsteile (16a) der Hilfskupplung an ihren freien Enden (30) spitz zulaufen.

6. Linearantrieb nach einem der vorhergehenden Ansprüche, **dadurch gekennzeichnet, dass** ein Kupplungsteil (16a) der Hilfskupplung innerhalb eines der beiden Kupplungsabschnitte (10a, 10b) angeordnet ist.

7. Linearantrieb nach einem der vorhergehenden Ansprüche, **dadurch gekennzeichnet, dass** das Kupplungsteil (16b) der Hilfskupplung des anderen Kupplungsabschnittes (10b) an einem Fortsatz des Kupplungsabschnittes angebracht ist, welcher gegenüber dem Kupplungsteil (14b) der Lastkupplung in Längsrichtung derselben vorsteht.

8. Linearantrieb nach einem der vorhergehenden Ansprüche, **dadurch gekennzeichnet, dass** das Anschlussteil als Hubrohr ausgebildet ist und wenigstens einer der diesem zugeordneten Kupplungsabschnitte (10a, 10b) wenigstens teilweise einstückig am Hubrohr angebracht ist.

## Claims

1. An electric motor linear drive for use on articles of furniture and patient lifters, which is provided with a drive unit, the drive output member of which is in the form of a linearly displaceable spindle nut which is operatively connected to a connection part for connection to an adjustable part of an article of furniture or a patient lifter, wherein the spindle nut is connectable to the connection part by way of a releasable, torque-carrying load coupling, wherein the load coupling (14a, 14b) is in the form of a dog clutch and there are provided two coupling portions (10a, 10b), **characterised in that** the first of the coupling portions (10a, 10b) is an integral component of the spindle nut and the second of the coupling portions (10a, 10b) is connected to the connection part, and there is further provided an auxiliary coupling (16a, 16b), the first coupling part (16a, 16b) of which is mounted to the first coupling portion (10a, 10b) and the second coupling part of which is mounted to the second coupling portion, and the coupling parts of the load coupling (14a, 14b) and the auxiliary coupling (16a, 16b) are positioned relative to each other in the closing direction in such a way that in the course of the closing movement of the two coupling portions the two coupling parts of the auxiliary coupling come into engagement with each other before the two coupling parts (14a, 14b) of the load coupling come into engagement with each other and the cooperating recesses (26) and projections (28) of both coupling parts (16a, 16b) of the auxiliary coupling are so designed and arranged so that in the course of the relative closing movement of the coupling portions (10a, 10b) the coupling parts (14a, 14b) of the load coupling experience orientation in the circumferential direction for the final closed position.

2. A linear drive according to claim 1 **characterised in that** at least one of the surfaces that come into contact with each other of the two coupling parts (16a, 16b) extends inclinedly relative to the closing direction of the coupling portions (10a, 10b) in such a way that in the course of the closing movement a torque is produced in order to orient the coupling parts (14a, 14b) of the load coupling relative to each other in the circumferential direction.

3. A linear drive according to one of the preceding claims **characterised in that** the diameter of the circular coupling parts (16a, 16b) of the auxiliary coupling is smaller than the diameter of the coupling parts of the load coupling (14a, 14b).

4. A linear drive according to one of the preceding claims **characterised in that** the coupling portions (16a, 16b) of the auxiliary coupling are of such a form that in the closed position of the two coupling portions (10a, 10b) a limited relative rotational movement of the two coupling portions is possible.

5. A linear drive according to one of the preceding claims **characterised in that** the projections (22) of at least one of the coupling parts (16a) of the auxiliary coupling taper to a point at their free ends (30).

6. A linear drive according to one of the preceding claims **characterised in that** a coupling part (16a) of the auxiliary coupling is arranged within one of the two coupling portions (10a, 10b).

7. A linear drive according to one of the preceding claims **characterised in that** the coupling part (16b) of the auxiliary coupling of the other coupling portion (10b) is mounted to an extension of the coupling portion which protrudes with respect to the coupling part (14b) of the load coupling in the longitudinal direction thereof.

8. A linear drive according to one of the preceding claims **characterised in that** the connection part is in the form of a lift tube and at least one of the coupling portions (10a, 10b) associated therewith is at least partially integrally mounted on the lift tube.

## Revendications

1. Entraînement linéaire électromotorisé destiné à être utilisé sur des meubles et des lève-patients, qui est muni d'une unité d'entraînement dont l'élément de sortie est réalisé sous la forme d'un écrou de broche mobile linéairement qui est relié de manière fonctionnelle à une pièce de liaison pour la connexion à une partie réglable d'un meuble ou d'un lève-patient, l'écrou de broche pouvant être relié à la pièce de liaison via un embrayage en charge amovible recevant un couple, l'embrayage en charge (14a,14b) étant réalisé en tant qu'embrayage à griffes et deux parties d'embrayage (10a,10b) étant prévus,
**caractérisé en ce que** la première des parties d'embrayage (10a, 10b) est une partie intégrante de l'écrou de broche et la seconde des parties d'embrayage (10a, 10b) est reliée à la piève de liaison et un embrayage auxiliaire (16a, 16b) est en outre prévu, dont la première pièce d'embrayage (16a, 16b) est fixée à la première partie d'embrayage (10a, 10b) et dont la deuxième pièce d'embrayage est fixée à la deuxième partie d'embrayage, et les pièces d'embrayage de l'embrayage en charge (14a, 14b) et de l'embrayage auxiliaire (16a, 16b) sont positionnées l'une par rapport à l'autre dans la direction de fermeture de telle sorte que les deux pièces de l'embrayage auxiliaire viennent en prise l'une avec l'autre au cours du mouvement des deux parties d'embrayage avant que les deux pièces d'embrayage (14a, 14b) de l'embrayage en charge viennent en prise l'une avec l'autre, et les évidements (26) et saillies (28) des deux parties d'embrayage (16a, 16b) de l'embrayage auxiliaire coopérant sont conçus et disposés de telle sorte que, au cours du mouvement de fermeture relatif des parties d'embrayage (10a, 10b), les pièces d'embrayage (14a, 14b) de l'embrayage en charge subissent un alignement dans le sens périphérique pour la position finale fermée.

2. Entraînement linéaire selon la revendication 1, **caractérisé en ce qu'**au moins une des surfaces des deux pièces d'embrayage (16a, 16b) en contact l'une avec l'autre s'étend obliquement par rapport à la direction de fermeture des parties d'embrayage (10a, 10b) de telle manière qu'un couple est produit au cours du mouvement de fermeture afin d'orienter les pièces d'embrayage (14a, 14b) de l'embrayage en charge l'une par rapport à l'autre dans la direction circonférentielle.

3. Entraînement linéaire selon l'une des revendications précédentes, **caractérisé en ce que** le diamètre des pièces d'embrayage circulaires (16a, 16b) de l'embrayage auxiliaire est inférieur au diamètre des pièces d'embrayage de l'embrayage en charge (14a, 14b).

4. Entraînement linéaire selon l'une des revendications précédentes, **caractérisé en ce que** les parties d'embrayage (16a, 16b) de l'embrayage auxiliaire sont réalisées de telle sorte qu'en position fermée des deux parties d'embrayage (10a, 10b) un mouvement de rotation relatif limité des deux parties d'embrayage est possible.

5. Entraînement linéaire selon l'une des revendications précédentes, **caractérisé en ce que** les saillies (22) sont formés de telle sorte que les saillies d'au moins une des pièces d'embrayage (16a) de l'embrayage auxiliaire sont pointues à leurs extrémités libres.

6. Entraînement linéaire selon l'une des revendications précédentes, **caractérisé en ce qu'**une pièce d'embrayage (16a) de l'embrayage auxiliaire est disposée dans une des deux parties d'embrayage (10a, 10b).

7. Entraînement linéaire selon l'une des revendications précédentes, **caractérisé en ce que** la pièce d'embrayage (16b) de l'embrayage auxiliaire de l'autre partie d'embrayage (10b) est fixée à une extension de la partie d'embrayage qui fait saillie en face de la pièce d'embrayage (14b) de l'embrayage en charge dans la direction longitudinale de celui-ci.

8. Entraînement linéaire selon l'une des revendications précédentes, **caractérisé en ce que** la pièce de liaison est réalisée sous forme de tube de levage et **en ce qu'**au moins une des parties d'embrayage (10a, 10b) qui lui sont associées est fixée au moins partiellement en une seule pièce au tube de levage.
